**Europäisches Patentamt**

**European Patent Office**

**Office européen des brevets**

(11) Numéro de publication: **0 032 474**
**A1**

(12) **DEMANDE DE BREVET EUROPEEN**

(21) Numéro de dépôt: **81400042.8**

(22) Date de dépôt: **14.01.81**

(51) Int. Cl.³: **B 62 D 53/06**
**B 60 P 3/06**

(30) Priorité: **14.01.80 FR 8000704**

(43) Date de publication de la demande:
**22.07.81 Bulletin 81/29**

(84) Etats contractants désignés:
**BE CH DE LI LU NL**

(71) Demandeur: **Couturier, Roger**
**Rue de Fontenailles**
**F-71000 Macon(FR)**

(72) Inventeur: **Couturier, Roger**
**Rue de Fontenailles**
**F-71000 Macon(FR)**

(74) Mandataire: **Hoisnard, Jean-Claude et al,**
**Cabinet Beau de Lomenie 55, rue d'Amsterdam**
**F-75008 Paris(FR)**

(54) Engin de transport rapide d'engins mobiles lents.

(57) L'invention est relative à un ensemble de transport rapide d'engins mobiles lents 29, constitué par un tracteur et par une remorque qui est attelée au tracteur et dont le châssis 4 est susceptible d'être mis au contact (28) du sol 13 à une première extrémité, et est entièrement dégagé entre ses extrémités.

Ce châssis 4 a une largeur de sa partie dégagée au plus égale à l'écartement minimal des groupes d'organes de déplacement 31 droit et gauche de l'engin à transporter, et, dans la configuration dans laquelle la première extrémité est en contact avec le sol, a une hauteur maximal $H$ qui est au plus égale à la garde au sol $G$ dudit engin reposant sur le sol par l'intermédiaire de ses organes de déplacement 31, de manière que, par simple déplacement sur le sol 13 au moyen des ses organes de déplacement 31, l'engin puisse être placé en surplomb de la partie dégagée, ses organes de déplacement 31 étant situés à côté du châssis 4 de part et d'autre de ce châssis.

Une application est la réalisation d'une remorque porte-grue mobile.

FIG. 6

Engin de transport rapide d'engins mobiles lents.

On connaît déjà des ensembles de transport sur route d'engins mobiles lents, tels, par exemple, que des remorques routières porte-chars.

Le chargement de l'engin à transporter sur une telle remorque exige généralement des manoeuvres délicates du fait de la difficulté d'accès de l'engin sur la plateforme de la remorque.

L'invention entend remédier à cet état de choses, en proposant une nouvelle disposition dans laquelle il n'est plus nécessaire de placer les organes de déplacement de l'engin -chenilles ou roues- sur la plateforme même de la remorque.

A cet effet, l'invention a donc pour objet un ensemble de transport rapide d'engins mobiles lents, munis d'organes de déplacement, adapté notamment au transport de grues et d'excavateurs mobiles, et constitué par un tracteur et par une remorque, qui est susceptible d'être attelée au tracteur, et dont le châssis est susceptible d'être mis au contact du sol au moins à une première de ses extrémités et est entièrement dégagé de ladite première extrémité jusqu'à sensiblement sa deuxième extrémité.

Ce châssis, d'une part, a une largeur de sa partie dégagée au plus égale à l'écartement minimal des groupes d'organes de déplacement droit et gauche de l'engin mobile à transporter, d'autre part, dans la configuration dans laquelle la première extrémité est en contact avec le sol, a une hauteur maximale d'au moins la première partie de ladite partie dégagée qui est au plus égale à la garde au sol dudit engin mobile reposant sur le sol par l'intermédiaire de ses organes de déplacement, de manière que, par simple déplacement sur le sol au moyen de ses organes de déplacement, l'engin soit susceptible d'être placé en surplomb de ladite première partie de la partie dégagée, ses organes de déplacement étant situés à côté du châssis de part et d'autre de ce châssis.

Les avantageuses dispositions suivantes sont, en outre, de préférence, adoptées :

- la remorque comprend une poutre centrale allongée présentant lesdites largeur et hauteur, et, une armature qui est fixée de manière amovible à ladite poutre centrale, près de ladite première extrémité et qui est munie du dispositif d'attelage au tracteur ;

- la fixation amovible de l'armature à la poutre centrale comprend un vérin de réglage de la position relative desdites armature et poutre centrale, attelé entre ces éléments ;

- une cale est susceptible d'être disposée entre l'armature et le tracteur et est apte à maintenir en position relative ladite armature par rapport au tracteur, lorsque l'armature est détachée de la poutre centrale ;

- la deuxième extrémité de la remorque est constituée par :

    . un support d'organes de déplacement,

    . des organes de déplacement montés sur ledit support,

    . un bâti auxiliaire, qui est monté pivotant sur ce support autour d'un premier axe horizontal transversal, et qui est fixé à la poutre centrale par un deuxième axe de pivotement parallèle au premier axe et par un moyen de blocage du pivotement autour dudit deuxième axe, et,

    . un dispositif de commande de ce pivotement autour du deuxième axe, tel qu'un vérin attelé entre le bâti auxiliaire et la poutre centrale ;

- les organes de déplacement montés sur le support étant constitués par au moins un essieu rigide de roues, ledit premier axe est confondu avec l'axe dudit essieu ;

- ledit support est constitué par ledit essieu ;

- ladite hauteur maximale est inférieure à ladite garde au sol, cependant qu'une autre cale, amovible, est susceptible d'être disposée entre la face supérieure de la partie dégagée de la remorque et la face inférieure du châssis de l'engin à transporter et a une épaisseur égale à la différence entre lesdites garde au sol et hauteur maximale.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels :

- la figure 1 est une vue en élévation d'un ensemble de transport conforme à l'invention avant toute opération préparant le chargement d'une grue sur la remorque ;

- la figure 2 est une vue en élévation de détails agrandis d'éléments déjà représentés sur la figure 1 ;

- les figures 3 et 4 représentent deux phases successives conduisant à la séparation du tracteur et de la remorque de l'ensemble de la figure 1 ;

- la figure 5 est une vue en élévation de la remorque dans la configuration permettant le chargement de la grue mobile ;

- la figure 6 est une vue en élévation de la grue mobile présentée au-dessus de la remorque dans la configuration de chargement ;

- la figure 7 est une vue suivant flèche F de la figure 6 ;

- la figure 8 est une vue en élévation de la remorque et de la grue, les opérations du chargement proprement dit étant achevées ; et,

- la figure 9 est une vue en élévation de l'ensemble de transport de la figure 1, la grue étant chargée sur la remorque et l'ensemble étant apte au déplacement routier.

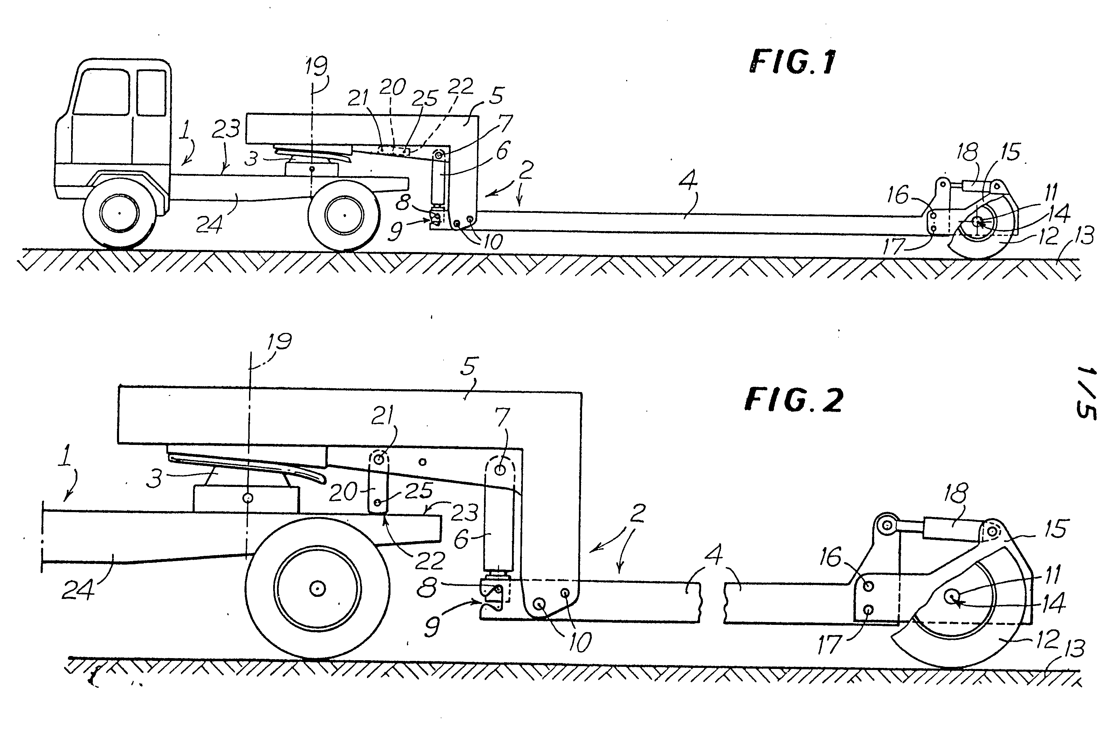

Les figures 1 à 9 représentent les configurations successives d'un ensemble de transport conforme à l'invention apte à se déplacer sur route, depuis celle où la grue mobile est non chargée sur la remorque, jusqu'à celle où cette grue mobile est chargée sur la remorque en vue de son transport.

L'ensemble de transport de la figure 1 comporte un tracteur routier 1, et une remorque routière 2, qui y est attelée au moyen d'un classique dispositif d'attelage 3 permettant l'orientation du tracteur par rapport à la remorque et la traction de celle-ci par ledit tracteur.

La remorque 2 est constituée par :

- une poutre centrale 4,

- une armature 5, qui est fixée de manière amovible à l'extrémité avant de la poutre 4 au moyen, d'une part, de vérins 6 articulés par leurs extrémités supérieures à ladite armature 5 au moyen d'axes 7 et par leurs extrémités inférieures en forme d'axes 8 à des encoches 9 ménagées dans l'extrémité avant de la poutre centrale 4, d'autre part, de deux axes 10 qui traversent la partie inférieure de l'armature 5 et l'extrémité avant de la poutre centrale 4 et immobilisent ainsi ces deux pièces l'une par rapport à l'autre,

- un essieu arrière 11 à roues 12 reposant sur le sol 13, d'axe 14,

- un bâti auxiliaire 15, qui est monté pivotant autour de l'axe 14 de l'essieu 11, qui est en outre monté pivotant par rapport à l'extrémité arrière de la poutre centrale 4 au moyen d'un autre axe 16 horizontal, transversal, parallèle à l'axe 14, et qui, dans la configuration de la figure 1, est immobilisé par rapport à la poutre centrale 4 par un axe de blocage amovible 17 qui traverse à la fois ledit bâti auxiliaire 15 et ladite poutre centrale 4. Un vérin 18 attelé entre le bâti auxiliaire 15 et la poutre centrale 4 permet le réglage du pivotement relatif de ces deux pièces, comme cela sera vu ultérieurement.

La poutre 4, dans la configuration de la figure 1, est hors d'appui direct sur le sol 13, reposant indirectement sur celui-ci, d'une part, à l'arrière, par l'intermédiaire du bâti auxiliaire 15 et des roues 12, d'autre part, à l'avant, par l'intermédiaire de l'armature 5 et du tracteur 1, sur laquelle cette armature repose, en y étant attelée à pivotement autour de l'axe vertical 19 du dispositif d'attelage 3. La poutre 4 est alors sensiblement horizontale.

Une première cale 20 est montée sur l'armature 5, pivotante autour d'un axe horizontal 21 et est susceptible, dans sa position active de la figure 2, d'être en appui par son extrémité libre 22 sur la face supérieure 23 du châssis 24 du tracteur 1, et ainsi, en coopération avec le dispositif d'attelage 3 de soutenir l'armature 5 par rapport au tracteur 1. Dans la configuration de la figure 1, la cale 20 est rabattue vers l'arrière dans sa position inactive dans laquelle l'armature 5 n'est reliée au tracteur que par le dispositif d'attelage 3. A noter qu'un axe amovible 25 maintient la cale 20, solidaire, soit de l'armature 5 dans la position inactive de la figure 1, soit du châssis 24 du tracteur dans la position active de la figure 2.

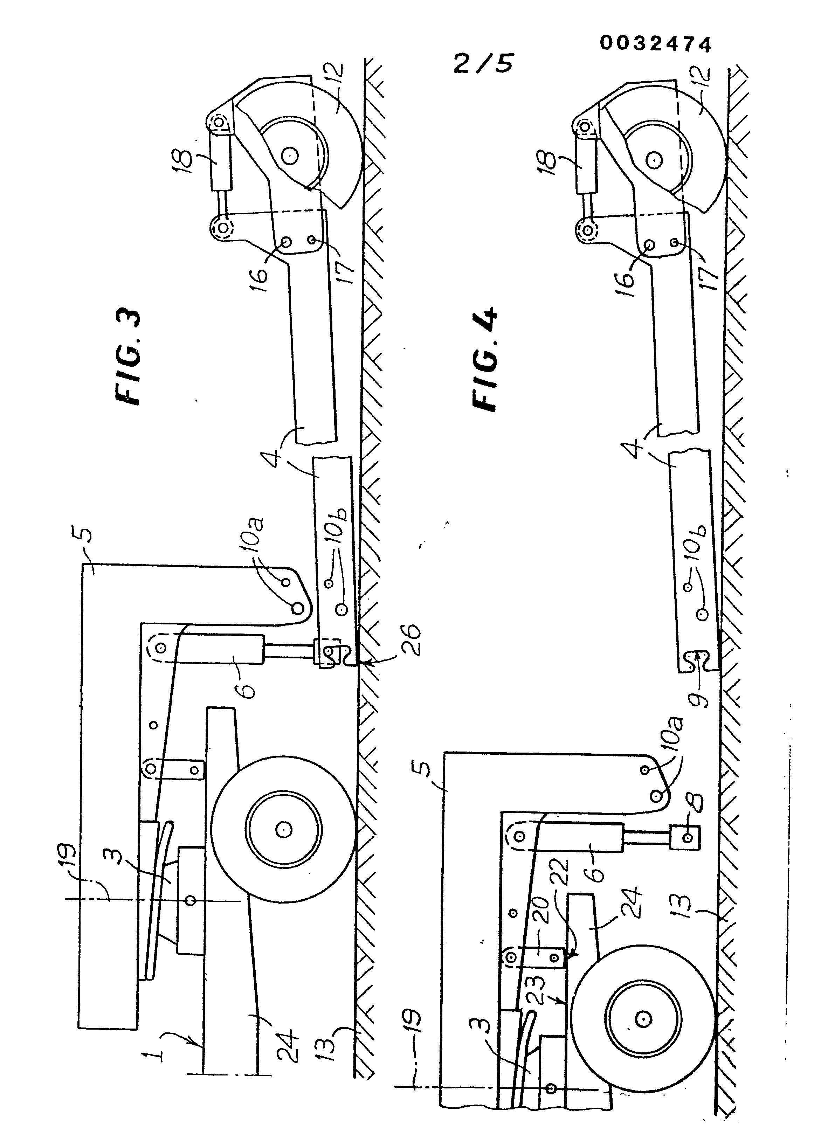

La configuration de la figure 3 se déduit de celle de la figure 2, d'abord par enlèvement hors de leurs logements 10a, 10b dans l'armature 5 et dans la poutre 4, respectivement, des axes d'immobilisation 10, puis par abaissement de l'extrémité avant de la poutre 4 au moyen des vérins 6 (un de chaque côté) jusqu'à ce que le bord inférieur 26 de l'extrémité avant de la poutre centrale 4 soit en contact avec le sol 13.

Une nouvelle et petite extension des vérins 6 permet alors aux axes 8 de leurs extrémités inférieures de sortir hors des encoches 9, et ainsi, au tracteur routier 1 de s'écarter de la poutre centrale 4, en supportant l'armature 5 (figure 4).

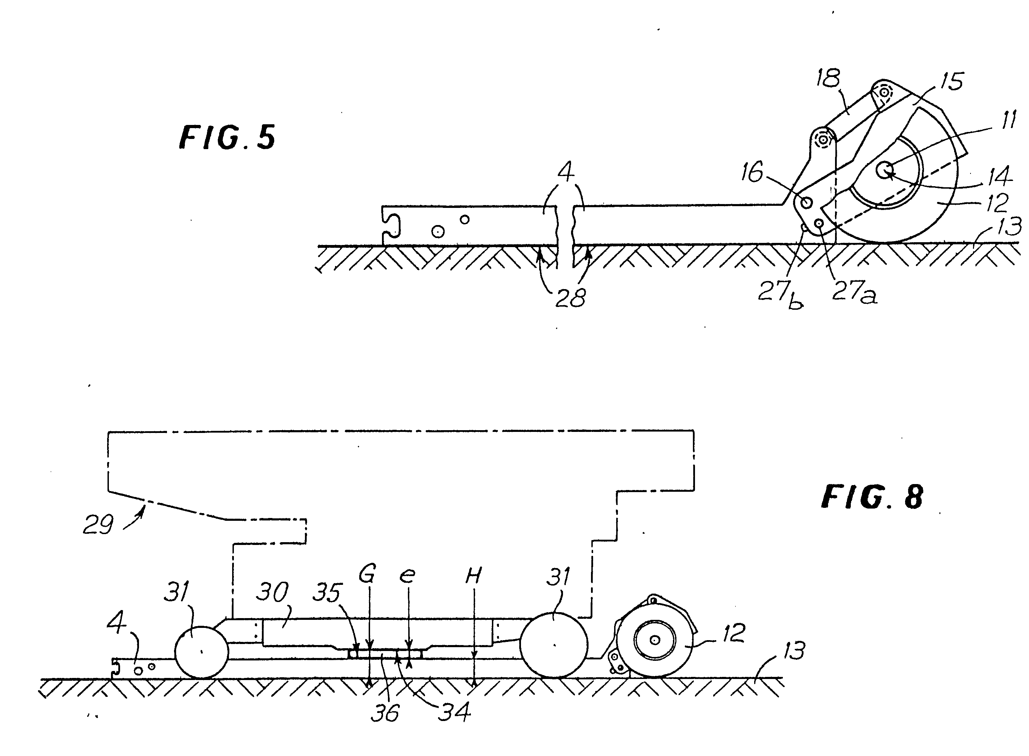

Conformément à l'exemple de réalisation représenté, qui constitue la réalisation préférée de l'invention, la totalité de la poutre centrale 4 peut être déposée sur le sol 13. Il suffit, pour ce faire, de retirer l'axe 17 hors de ses logements 27a dans le bâti auxiliaire 15, et, 27b dans la poutre centrale 4, puis de commander, de manière entièrement connue en soi, le raccourcissement du vérin 18 pour permettre le pivotement relatif autour de l'axe 16 de la poutre centrale et du bâti auxiliaire 15 jusqu'à ce que la face inférieure 28 de ladite poutre centrale 4 repose sur le sol 13 (figure 5). On peut noter que le vérin 18 peut n'être qu'à simple effet, car, compte tenu du poids de la poutre centrale 4 et de son effet, qui est de la faire pivoter par rapport au bâti auxiliaire dans le sens conduisant à sa mise en appui sur le sol, il suffit de mettre la grande chambre du vérin 18 en communication avec un réservoir de décharge pour obtenir l'abaissement de la poutre centrale 4 jusqu'à l'appui sur le sol 13 de sa face inférieure 28.

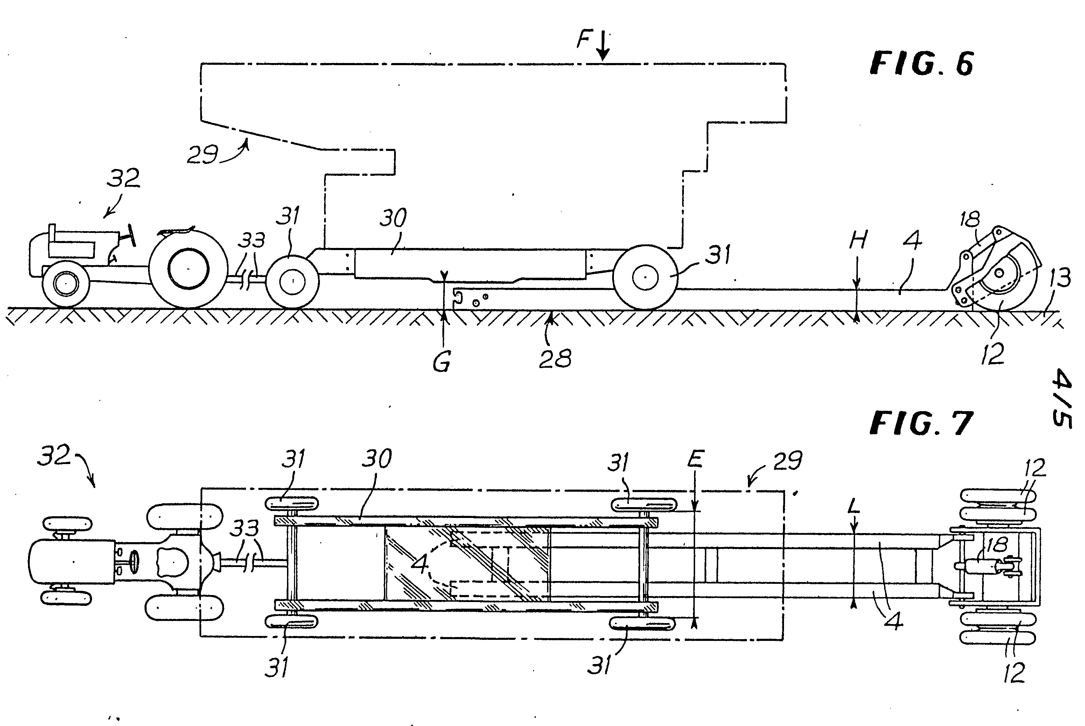

La poutre centrale 4 reposant sur le sol 4, il devient très facile de charger un engin mobile 29, tel qu'une grue mobile dont la silhouette est représentée sur les figures 6 à 8. Cet engin comporte un châssis 30 muni d'organes de déplacement 31, en l'espèce des roues. Il peut donc se déplacer, ou être déplacé aisément sur le sol, notamment au moyen d'un tracteur de manoeuvre 32 auquel une barre d'attelage 33 le relie. Il est alors nécessaire d'observer les points suivants :

- la garde au sol $G$ du châssis 30 de l'engin 29 est supérieure à la hauteur $H$ de la poutre centrale 4 par rapport au sol 13, hauteur en l'espèce égale à l'épaisseur de ladite poutre centrale 4 ;

- l'écartement minimal $E$ des faces internes des roues 31 de l'engin 29 est supérieur à la largeur maximale $L$ de la poutre centrale 4.

Ainsi, l'engin 29 peut-il être déplacé par simple roulement sur ses propres roues jusqu'à ce que ses roues droite et gauche 31 soient placées de part et d'autre de la poutre centrale 4 et que son châssis 30 soit disposé au-dessus de cette poutre centrale 4 (figures 6 et 7).

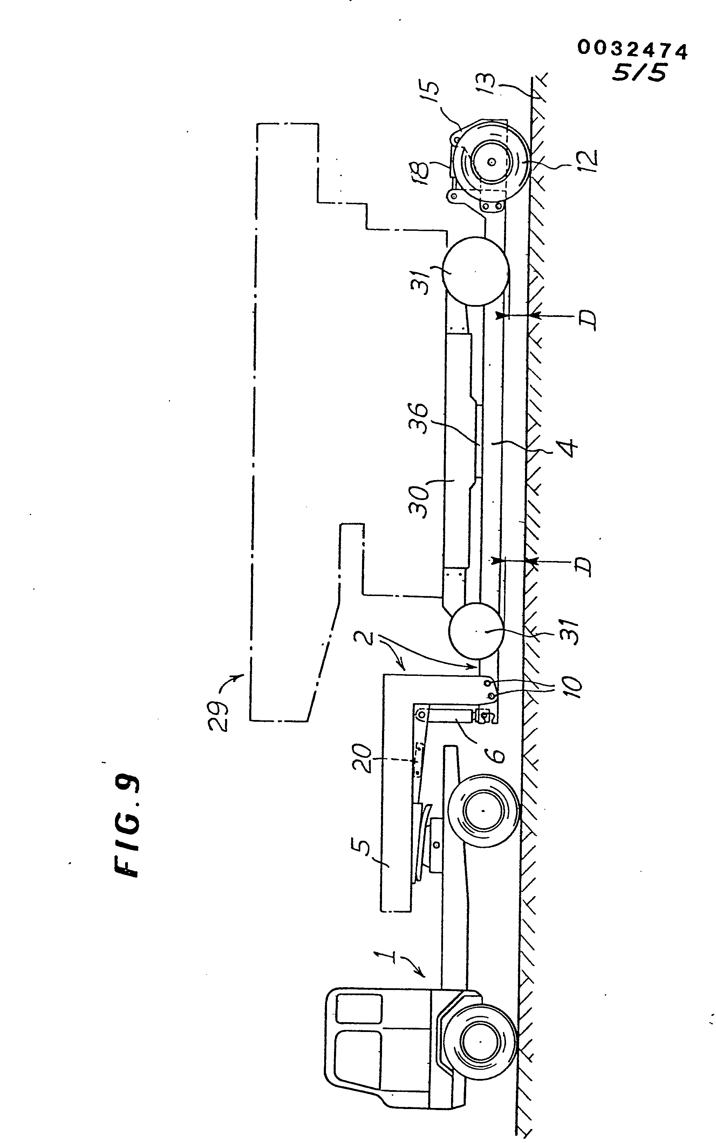

Lorsque l'engin 29 est totalement engagé au-dessus de la poutre centrale 4 (figure 8), on en effectue le calage par mise en place entre la face inférieure 34 de son châssis 30 et la face supérieure 35 de la poutre centrale, d'une cale amovible 36 d'une épaisseur $e$ égale à la différence $G - H$ entre la garde au sol $G$ et la hauteur $H$ de la poutre centrale 4.

Il suffit alors, pour pouvoir transporter l'engin 29 sur route, de faire les manoeuvres inverses des précédentes concernant la poutre centrale 4, en en relevant, d'abord, l'extrémité arrière en commandant l'extension du vérin 18, puis l'extrémité avant au moyen des vérins 6 (figure 9). La poutre centrale 4 étant de nouveau solidarisée de l'armature 5 au moyen des axes 10, la cale pivotante 20 peut de nouveau être placée dans sa position inactive. La remorque 2, supportant de l'engin 29 est attelée au tracteur routier 1 et prête au transport sur route dudit engin. Naturellement, le relèvement de la poutre centrale 4 est suffisant pour que les roues 31 de l'engin soient hors d'appui du sol 13, en étant écartées de celui-ci d'une distance $D$ non nulle.

On notera les points suivants :

- l'engin 29 pourrait être muni de chenilles au lieu des roues 31, ce qui ne changerait rien aux manoeuvres précédemment décrites, ni à la capacité de transport de l'ensemble décrit ;

- en une variante simplifiée, seul le bord inférieur avant 26 de la poutre centrale est susceptible d'être en appui sur le sol 13, le bâti auxiliaire 15 ne pouvant pas pivoter par rapport à la poutre centrale 4. Du moment que l'engin 29 a une garde au sol $G$ suffisamment supérieure à la hauteur $H$ de la partie médiane de la poutre centrale 4 pour pouvoir être engagé entièrement au-dessus de cette poutre, lorsque le bord inférieur 26 repose à terre, il est encore possible d'en effectuer le transport par une telle variante simplifiée de la poutre centrale ;

- enfin, la manoeuvre des figures 6 et 7, réalisée au moyen d'un tracteur de manoeuvre 32, peut être réalisée au moyen de n'importe quel type de tracteur et, par exemple, au moyen d'un tracteur routier tel que le tracteur 1, naturellement équipé à cet effet d'une barre d'attelage 33 adapte à la manoeuvre désirée.

Les avantages de l'ensemble décrit sont évidents. La manoeuvre est très simple, très courte aussi. Sur ce point, on peut noter une division par quatre environ du temps de chargement de l'engin 29 sur la remorque 2 (environ 30 minutes au lieu de deux heures avec les ensembles de transport antérieurement connus), et une réduction analogue au moment du déchargement.

De plus, aucune grue auxiliaire n'est nécessaire pour effectuer ces manoeuvres de chargement et de déchargement.

L'invention n'est pas limitée à la réalisation décrite, mais en couvre au contraire toutes les variantes qui pourraient lui être apportés sans sortir de son cadre, ni de son esprit.

REVENDICATIONS
----------------------------

1 - Ensemble de transport rapide d'engins mobiles lents (29), muni d'organes de déplacement (31), adapté notamment au transport de grues et d'excavateurs mobiles, et constitué par un tracteur (1) et par une remorque (2), qui est susceptible d'être attelée au tracteur, et dont le châssis (4) est susceptible d'être mis au contact du sol (13) au moins à une première (26) de ses extrémités et est entièrement dégagé de ladite première extrémité jusqu'à sensiblement sa deuxième extrémité, caractérisé en ce que ce châssis (4), d'une part, a une largeur (L) de sa partie dégagée au plus égale à l'écartement minimal (E) des groupes d'organes de déplacement (31) droit et gauche de l'engin mobile à transporter, d'autre part, dans la configuration dans laquelle la première extrémité (26) est en contact avec le sol (13), a une hauteur maximale (H) d'au moins la première partie de ladite partie dégagée qui est au plus égale à la garde au sol (G) dudit engin mobile reposant sur le sol (13) par l'intermédiaire de ses organes de déplacement (31), de manière que par simple déplacement sur le sol (13) au moyen de ses organes de déplacement (31), l'engin soit susceptible d'être placé en surplomb de ladite première partie de la partie dégagée, ses organes de déplacement (31) étant situés à côté du châssis (4) de part et d'autre de ce châssis.

2 - Ensemble de transport selon la revendication 1, caractérisé en ce que la remorque comprend une poutre centrale (4) allongée présentant lesdites largeur (L) et hauteur (H), et, une armature (5) qui est fixée de manière amovible (10) à ladite poutre centrale (4), près de ladite première extrémité (26) et qui est munie du dispositif d'attelage (3) au tracteur (1).

3 - Ensemble de transport selon la revendication 2, caractérisé en ce que la fixation amovible (10) de l'armature (5) à la poutre centrale (4) comprend un vérin de réglage (6) de la position relative desdites armature (5) et poutre centrale (4), attelé entre ces éléments.

4 - Ensemble de transport selon l'une quelconque des revendications 2 et 3, caractérisé en ce qu'une cale (20) est susceptible d'être disposée entre l'armature (5) et le tracteur (1) et est apte à maintenir en position relative ladite armature (5) par rapport au tracteur (1) lorsque l'armature (5) est détachée de la poutre centrale (4).

5 - Ensemble de transport selon l'un quelconque groupe de deux revendications 2 et 3, 2 et 4, caractérisé en ce que la deuxième extrémité de la remorque est constituée par :

- un support (11) d'organes de déplacement (12),
- des organes de déplacement (12) montés sur ledit support (11),
- un bâti auxiliaire (15), qui est monté pivotant sur ce support (11) autour d'un premier axe horizontal transversal (14), et qui est fixé à la poutre centrale (4) par un deuxième axe de pivotement (16) parallèle au premier axe (14) et par un moyen (17) de blocage du pivotement autour dudit deuxième (16) axe, et,
- un dispositif de commande (18) de ce pivotement autour du deuxième axe (16), tel qu'un vérin attelé entre le bâti auxiliaire (15) et la poutre centrale (4).

6 - Ensemble de transport selon la revendication 5, caractérisé en ce que les organes de déplacement (12) montés sur le support (11) étant constitués par au moins un essieu rigide de roues (11), ledit premier axe (14) est confondu avec l'axe dudit essieu (11).

7 - Ensemble de transport selon la revendication 6, caractérisé en ce que ledit support (11) est constitué par ledit essieu.

8 - Ensemble de transport selon l'une quelconque des revendications 1 à 7, caractérisé en ce que ladite hauteur maximale ($H$) est inférieure à ladite garde au sol ($G$), cependant qu'une autre cale (36), amovible, est susceptible d'être disposée entre la face supérieure (35) de la partie dégagée (4) de la remorque (2) et la face inférieure (34) du châssis (30) de l'engin (29) à transporter et a une épaisseur (e) égale à la différence entre lesdites garde au sol (G) et hauteur maximale (H).

**FIG.1**

**FIG.2**

FIG. 3

FIG. 4

2/5

0032474

FIG.5

FIG.8

0032474

**FIG. 6**

F↓

29

32

33  31  30  31  H  4  18

G  28  12  13

4/5

**FIG. 7**

32  31  30  31  E  29  12

33  4  18  4  L

31  31  12

0032474

FIG.9

Office européen
des brevets

**0032474**
Numéro de la demande

**RAPPORT DE RECHERCHE EUROPEENNE**

EP 81 40 0042

| Catégorie | Citation du document avec indication, en cas de besoin, des parties pertinentes | Revendication concernée |
|---|---|---|
| | US - A - 4 047 733 (PARKES)<br>  * En entier * | 1-8 |
| | US - A - 3 884 494 (ASHBY et al)<br>  * En entier * | 1 |
| | GB - A - 856 592 (MARTIN)<br>  * En entier * | 1 |
| | US - A - 2 893 747 (HAMBLIN)<br>  * En entier * | 1,5-7 |
| | US - A - 2 794 565 (RATLIFF)<br>  * En entier * | 1,8 |
| A | US - A - 4 120 513 (HURT) | |

**DOCUMENTS CONSIDERES COMME PERTINENTS**

**CLASSEMENT DE LA DEMANDE (Int. Cl. 3)**

B 62 D 53/06
B 60 P  3/06

**DOMAINES TECHNIQUES RECHERCHES (Int. Cl. 3)**

B 62 D
B 60 P

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 19-02-1981 | SCHMAL |

OEB Form 1503.1  06.78